# EUROPÄISCHE PATENTSCHRIFT

(11) **EP 0 868 759 B1**
(45) Veröffentlichungstag und Bekanntmachung des Hinweises auf die Patenterteilung: **18.04.2001**
(21) Anmeldenummer: 96946061.7
(22) Anmeldetag: 06.12.1996
(51) Int. Cl.: H01M 8/02

(54) **BIPOLARE PLATTE MIT SELEKTIVER BESCHICHTUNG**
SELECTIVELY COATED BIPOLAR PLATE
PLAQUE BIPOLAIRE A PLACAGE SELECTIF

(30) Priorität: 20.12.1995 DE 19547699
(43) Veröffentlichungstag der Anmeldung: 07.10.1998
(73) Patentinhaber: FORSCHUNGSZENTRUM JÜLICH GMBH, 52425 Jülich (DE)
(72) Erfinder: QUADAKKERS, Willem, J., NL-6363 BN Wijnandsrade (NL)
(86) Internationale Anmeldenummer: DE9602366
(87) Internationale Veröffentlichungsnummer: WO9723006

(56) Entgegenhaltungen:
- EP-A- 0 446 680
- EP-A- 0 714 147
- WO-A-96/28855
- DE-A- 4 016 157
- DE-C- 4 410 711
- PATENT ABSTRACTS OF JAPAN vol. 095, no. 009, 31.Oktober 1995 & JP 07 153469 A (SANYO ELECTRIC CO LTD), 16.Juni 1995,
- SOLID STATE IONICS, Bd. 52, Nr. 1/03, 1.Mai 1992, Seiten 69-75, XP000409626 KOFSTAD P ET AL: "HIGH TEMPERATURE CORROSION IN SOFC ENVIRONMENTS"

## Beschreibung

Die Erfindung bezieht sich auf eine aus einer chromoxidbildenden Legierung bestehenden bipolare Platte einer Hochtemperatur-Brennstoffzelle mit einer Korrosionseffekte vermindernden Schicht im Bereich der Gasleitflächen sowie ein Herstellungsverfahren für diese Platte. Eine derartige bipolare Platte sowie ein Herstellungsverfahren sind aus DE 44 10 711 C1 bekannt. Eine Hochtemperatur-Brennstoffzelle (Solid Oxide Fuel Cell - SOFC) ermöglicht eine direkte Umwandlung von chemischer in elektrische Energie. Der Brennstoff (H₂, CH₄, CO etc.) wird von einem Oxidationsmittel (O₂, Luft) durch einen sauerstoffleitenden Feststoffelektrolyten (Y-stabilisiertes ZrO₂) getrennt. Bei einer Betriebstemperatur der Zelle von etwa 950 °C werden Sauerstoffionen von der Kathodenseite durch den Elektrolyten geleitet, die an der Anode mit dem Brennstoff reagieren. Wegen des Ladungsausgleichs fließt ein Elektronenstrom in gleicher Richtung.

Damit die genannten Reaktionen mit genügend hohen Umsätzen ablaufen können, muß der Elektrolyt mit porösen, katalytisch wirkenden Elektrodenmaterialien beschichtet sein. Im allgemeinen besteht die Anode (Brennstoffseite) aus einem Ni/ZrO₂-Cermet, die Kathode (Sauerstoffseite) aus LaMn-Perowskit.

Die Spannung, die an einer Einzelzelle abgegriffen werden kann, ist recht niedrig (kleiner 1 V). Um die SOFC-Technik für die Stromerzeugung nutzen zu können, müssen daher mehrere Zellen zusammengeschaltet werden. Daher ist noch eine weitere Zellkomponente nötig, nämlich die bipolare Platte, die auch Interkonnektor genannt wird. Im Gegensatz zum Elektrolyten und den Elektroden, die größenordnungsmäßig 100 µm dick sind, ist die bipolare Platte bei den heute diskutierten SOFC-Flachzellen-Konzepten einige Millimeter dick und bildet dabei nicht nur das gaszuleitende Verbindungsglied zwischen den Einzelzellen, sondern auch die tragende Komponente der Zelle (EP 0338 823 A1).

Bei Betriebstemperaturen bis größenordnungsmäßig 1000 °C muß die bipolare Platte daher folgende Eigenschaften besitzen: ausreichende mechanische Festigkeit, Gasdichtigkeit, einfache (kostengünstige) Herstellbarkeit, thermische Ausdehnung, die den keramischen Elektrodenmaterialien ähnelt, gute elektrische Leitfähigkeit, Korrosionsbeständigkeit in dem oxidierenden Gas (Luft) und dem Brennstoff (H₂O/H₂) und Kompatibilität mit den Elektrodenmaterialien.

Zur Zeit werden zwei Werkstoffgruppen als Bipolarplattenmaterial diskutiert: Keramiken auf LaCrO₃-Basis sowie metallische Hochtemperatur-Werkstoffe. Letztere werden neuerdings wegen besserer Zähigkeit, besserer elektrischer Leitfähigkeit und leichterer Bearbeitbarkeit favorisiert. Aufgrund der geforderten Heißgas-Korrosionsbeständigkeit kommen nur Cr₂O₃ oder Al₂O₃ bildende Hochtemperatur-Werkstoffe in Frage. Dabei scheiden Legierungen auf NiCr- oder FeNiCr-Basis wegen des zu hohen thermischen Ausdehnungskoeffizienten (≅ 20 • 10⁻⁶ k⁻¹ im Vergleich zu ≅ 10 • 10⁻⁶ k⁻¹ für Elektrolyt/Elektroden) nach dem heutigen Kenntnisstand im allgemeinen aus.

Generell kann gesagt werden, daß Al₂O₃ bildende Legierungen mit sehr langsamem Schichtwachstum zwar eine bessere Korrosionsbeständigkeit als Cr₂O₃ bildende Legierungen zeigen. Jedoch treten durch die Al₂O₃-Bildung Probleme wegen der Erhöhung des Übergangswiderstandes an den Kontaktstellen zwischen bipolarer Platte und Elektrode auf. Daher sind chromoxidbildende Legierungen als Interkonnektorwerkstoff vorgesehen und zwar vor allem Legierungen auf Cr- oder FeCr-Basis. Sie haben den zusätzlichen Vorteil eines geringen Wärmeausdehnungskoeffizienten. Jedoch verhalten sich die relativ rasch bildenden, dickeren Oxidschichten mechanisch instabil. Sie platzen ab und können so den Gasfluß in den Gaskanälen bei Langzeitbetrieb beeinträchtigen. Außerdem besitzen die nach langen Zeiten gebildeten, dicken Cr₂O₃-Schichten eine geringe elektrische Leitfähigkeit und bilden bei hohem Sauerstoffdruck (wie er auf der Kathodenseite herrscht) flüchtige Chromoxide oder - hydroxide, die die Kathode oder die Kathode/Elektrolyt-Grenzfläche "vergiften".

Zur Lösung des Problems der sich bildenden, mechanisch instabilen Oxidschichten ist gemäß DE 44 10 711 C1 vorgesehen, als Bipolarplattenmaterial eine chromoxidbildende Legierung vorzusehen. Die Legierung ist im Bereich der Gasleitflächen mit einer aus Aluminium bestehenden Schutzschicht versehen. Die Aluminiumschicht wandelt sich bei den in der Brennstoffzelle herrschenden hohen Temperaturen auf ihrer Oberfläche in eine Al₂O₃-Schicht um. Die Al₂O₃-Schicht setzt Korrosionseffekte herab.

Nachteilhafte Auswirkungen sich bildender Chromoxidschichten im Bereich der Kontaktflächen zwischen Elektroden und bipolarer Platte müssen jedoch bei dieser bipolaren Platte unverändert hingenommen werden.

Aus DE 42 42 570 Al ist bekannt, neben den genannten FeCr- und Cr-Basislegierungen als Interkonnektorwerkstoff für Festoxid-Brennstoffzellen eine Mischung aus CrNi-Legierung und 50 bis 85 Gew. % (bezogen auf die Mischung) Oxidkeramik einzusetzen, die insbesondere aus Siliciumoxid oder Aluminiumoxid besteht und zur Einstellung des thermischen Ausdehnungskoeffizienten dienen soll. Spezielle Ausführungsdetails und deren mögliche Verhaltensweisen als bipolare Platte sind der Druckschrift jedoch nicht zu entnehmen.

Auch bei dieser bipolaren Platte ist zu erwarten, daß Chromoxidschichten mit oben genannten Problemen entstehen werden.

Aus EP 0446 680 A1 ist ein Stromkollektor zur Stromführung für Hochtemperaturbrennstoffzellen bekannt, bei dem die dem Stromkollektor aus einer Eisenbasis- oder Nickelbasislegierung mit mindestens 15 Gew.-% Cr und mindestens 4 Gew.-% Al und die Kontaktstellen aus porösem Pt oder Pd bestehen. Teilweise umfaßt der Stromkollektor auch noch eine zwischen Stromkollektor und Kontaktstellen befindliche Zwischenschicht aus Nickel oder Gold.

Aufgabe der Erfindung ist die Schaffung einer bipolaren Platte nebst einfachem Herstellungsverfahren, die oxidationsbeständig ist, eine gute Leitfähigkeit an der Grenzfläche zur Elektrode und eine geringe Abdampfrate von flüchtigem Chromoxid/hydroxid aufweist.

Gelöst wird die Aufgabe durch ein Verfahren mit den Merkmalen des Verfahrensanspruchs. Gelöst wird die Aufgabe ferner durch eine bipolare Platte mit den Merkmalen der Vorrichtungsansprüche. Vorteilhafte Ausgestaltungen ergeben sich aus den rückbezogenen Ansprüchen.

Elektrodenkontaktfläche ist die Grenzfläche zwischen bipolarer Platte und Elektrode.

Eine Mischoxidschicht zur Erhöhung der Leitfähigkeit sowie Verringerung der Abdampfrate wird z. B. durch Aufbringen einer dünnen Schicht aus einem Metall oder aus Metalloxiden erreicht, die bei Hochtemperatureinsatz mit Cr oder/und Cr₂O₃ an der Oxid/Gas-Grenzfläche ein Mischoxid (z. B. Spinelltyp) bildet. Dieses Mischoxid muß eine geringere Abdampfrate als Cr₂O₃ aufweisen und außerdem durch Einbau der Metallionen in das Cr₂O₃ dessen elektrische Leitfähigkeit erhöhen.

Hierfür geeignete Metalle oder deren Oxide sind z. B. Ni, Co oder Fe, wobei der Einfluß von Ni auf die elektrische Leitfähigkeit von Cr₂O₃ am größten ist.

Die Metalle oder deren Oxide können z. B. durch übliche PVD oder CVD-Verfahren aufgebracht werden. Ein kostengünstiges Verfahren für die Metalle ist außerdem galvanische Abscheidung bzw. Elektroplatieren.

Gemäß Haupt- und den hierauf rückbezogenen Ansprüchen ist ferner eine korrosionsvermindernde, elektrisch isolierende Schicht im Bereich der Gasleitflächen vorgesehen. Daß diese Schicht elektrisch isolierend ist, ermöglicht auf einfache Weise eine selektive Herstellung verschiedener Schutzschichten auf der bipolaren Platte, die optimale Eigenschaften bezüglich der gestellten Anforderungen aufweisen. Beispielsweise kann im Bereich der Gasleitflächen eine Al₂O₃-Schutzschicht vorgesehen werden, die ausgezeichnete korrosionsvermindernde Eigenschaften aufweist. Daß diese Schicht darüber hinaus elektrisch isolierend ist, ermöglicht vorteilhaft auf einfache, elektrochemische Weise die Aufbringung einer hiervon verschiedenen Schutzschicht im Bereich der Elektrodenkontaktflächen. Es ist so möglich, eine weitere Schutzschicht mit anderen physikalischen Eigenschaften, nämlich elektrisch leitfähigen Eigenschaften im Bereich der Elektrodenkontaktfläche aufzubringen. Zur Herstellung einer bipolare Platte wird verfahrensgemäß eine entsprechende chromoxidbildende Legierung gemäß DE 44 10 711 C1 derart beschichtet, daß eine Oberflächenbeschichtung im Bereich der Gasleitflächen durchgeführt wird, die elektrisch isoliert sowie Korrosionseffekte vermindert.

Eine derartige Beschichtung erfolgt in Form einer Al₂O₃-Oberflächenbeschichtung im Bereich der Gasleitflächen.

Zu diesem Zweck wird beispielsweise die Oberfläche der bipolaren Platte mit Aluminium angereichert. Bei Temperaturen von z. B. 1000 °C wird die angereicherte Schicht voroxidiert, so daß sich auf der gesamten Interkonnektoroberfläche Al₂O₃ bildet. Die Oxidschicht und die Al-angereicherte Zone wird von den Stegoberflächen der bipolaren Platte(d. h. von den Kontaktflächen mit den Elektroden) durch einen konventionellen Schleifvorgang entfernt.

Die Schichtdicke sollte einige Mikrometer betragen. Geeignet ist insbesondere eine Schichtdicke von 1 bis 3 µm.

Anschließend wird eine elektrochemische Beschichtung der Oberfläche mit Metallen vorgenommen, aus denen sich eine Oxidschicht mit höherer Leitfähigkeit und geringerer Abdampfrate im Vergleich zur chromoxidbildenden Legierung bei Einsatz in der Brennstoffzelle bildet. Es wird durch ein elektrochemisches Verfahren beschichtet, damit keine Beschichtung im Bereich der Gasleitflächen mehr erfolgt. Diesen Zweck erfüllt beispielsweise eine galvanische Beschichtung. Geeignete Metalle sind Nickel, Cobalt oder Eisen. Es entsteht so eine schichtförmige Anreicherung im Sinne des nebengeordneten Vorrichtungsanspruch.

Vorzugsweise wird eine dünne Schicht von z. B. ca. 1 - 10 µm, insbesondere 1 - 3 µm elektrochemisch abgeschieden. Da auf den Gaskanalwänden eine Schicht mit elektrisch isolierenden Eigenschaften vorliegt, wird an diesen Stellen keine metallische Abscheidung auftreten. Die Abscheidung geschieht nur auf den Teilen der bipolare Platte, die metallisch blank sind, also wie erwünscht auf den Stegoberflächen (Elektrodenkontaktfläche).

Mittels des Verfahrens wird so eine selektiv beschichtete bipolare Platte hergestellt, die aus einer chromoxidbildenden Legierung besteht. Diese weist im Bereich der Gasleitflächen eine Schutzschicht auf, die Korrosionseffekte vermindert und ein elektrischer Isolator ist. Z. B. handelt es sich um eine dünne Al₂O₃-Schicht. Im übrigen ist sie mit einer Metallschicht an der Elektrodenkontaktfläche überzogen. Als Metalle kommen Fe, Ni oder Co in Betracht, da diese die physikalischen Eigenschaften des Cr₂O₃ in gewünschter Weise modifizieren.

Als Bipolarplattenmaterialien eignen sich Chrom-, NiCr-FeCr-, Chrom-Nickel-Legierungen. Bevorzugt werden jedoch Chrom- oder Eisen-Chrom-Legierungen verwendet. Eine aus z. B. Aluminium bestehende Anreicherungsschicht auf den Gaskanalwänden sollte eine Dicke zwischen 20 und 200 µm, insbesondere 50 bis 100 µm, aufweisen. Die metallische Schicht auf den Stegoberflächen sollte 1 - 10 µm, insbesondere 1 - 3 µm betragen.

Es zeigen:
- Fig. 1: Schnitt durch eine zwischen Anode und Kathode angeordnete bipolare Platte;
- Fig. 2: Ausschnitt einer bipolaren Platte und die einzelnen Schritte bei der selektiven Beschichtung.

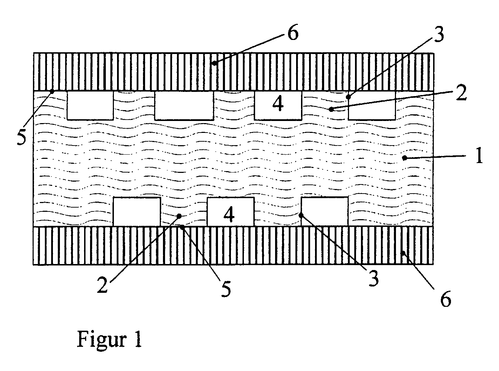

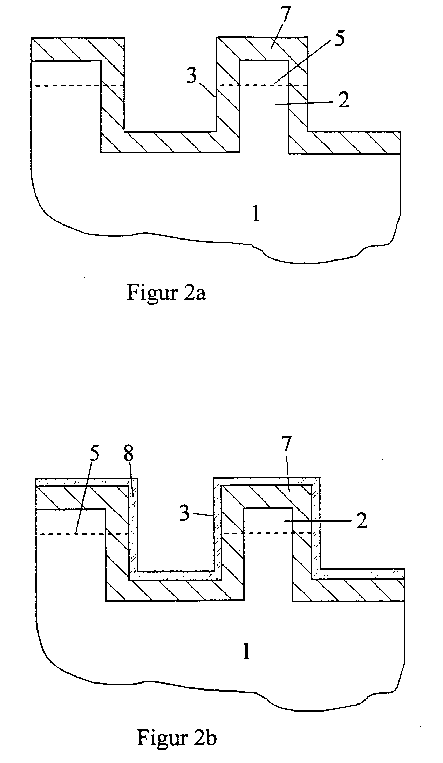

Fig. 1 zeigt die bipolare Platte 1 aus einer chromdioxidbildenden Legierung und zwar für T ≥ 900 °C eine Cr-Basis-Legierung oder für T ≤ 900 °C einen ferritischen Stahl mit 12 - 35 Gew. % Cr. Die typische Form (Platte von einigen Millimetern Dicke mit Gaskanälen) kann nach herkömmlicher Art durch zerspanende Bearbeitung eines Blechmaterials hergestellt werden oder mittels einer endkonturnahen Fertigung (near-net-shape Verfahren) nach pulvermetallurgischen Methoden (MIM, WPP). Die Stege 2 auf der Platte 1, die die Seitenwände 3 der Gaskanäle 4 bilden, werden zunächst geringfügig höher gefertigt, als in der Endform gewünscht ist (Fig. 2a), um der abschließenden Abtragung von Al-Anreicherungs- 7 und Oxidschichten 8 auf den Kontaktflächen 5 zwischen bipolarer Platte 1 mit den Elektroden 6 (Stirnflächen) Rechnung zu tragen.

Die so vorgefertigte bipolare Platte wird einem konventionellen Alitierungsvorgang unterzogen. Dazu wird die Platte in einem Pulvergemisch aus einem Inertmaterial (z. B. Al₂O₃, 90 %), einem Chlorid/Fluorid-Aktivator (z. B. NaCl oder NH₄Cl, 5 %) und Al-Pulver (5 %) bei erhöhter Temperatur (600 - 1300 °C) unter Schutzgasatmosphäre (z. B. Argon) ausgelagert. Typische Alitierbedingungen wären 3 h bei 1000 °C. Dabei entsteht auf der Oberfläche der Platte (Stirnflächen 5 der Stege und Wände 3 der Gaskanäle) eine Al-angereicherte Zone 7 gemäß Fig. 2a. Bei Vorliegen einer Cr-Basis-Legierung bilden sich z. B. intermetallische Phasen vom Typ Cr₅Al₈ oder Cr₄Al₉. Für die Anreicherung der Oberfläche mit Al können unterschiedliche Alitiertechniken oder auch andere Methoden angewandt werden, falls dies aus verfahrenstechnischen Gründen erwünscht wäre, z. B. CVD, PVD oder mechanische Beschichtung.

Nach der Al-Anreicherung erfolgt die in Fig. 2b gezeigte Voroxidation zur Bildung einer dünnen Al₂O₃-Schicht 8 auf der Oberfläche des Interkonnektors (z. B. durch Oxidation in Luft bei 1000 °C für 1 h).

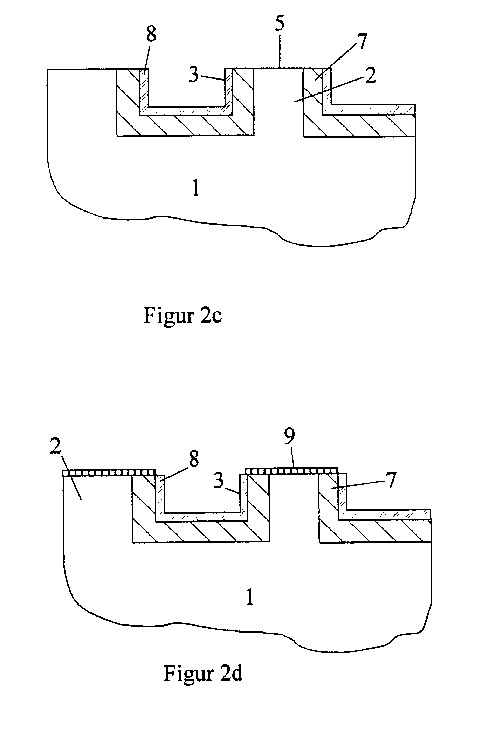

Durch eine einfache großflächige mechanische Bearbeitung (z. B. Schleifen) wird die Al₂O₃-Schicht 8 und die Al-angereicherte Schicht 7 von den Stirnflächen 5 der Stege 2 entfernt. Deren anfängliche Überdimensionierung wird der Dicke des abzuschleifenden Materials gerecht. Die Überdimensionierung soll größer sein als die Dicke der Al₂O₃-Schicht 8 plus die Eindringtiefe des Aluminiums in der Al-angereicherten Zone 7 (siehe Fig. 2c). Dann erfolgt eine Beschichtung (Schichtdicke 1 - 10 insbesondere 1- 3 µm) mit Ni, Fe oder Co durch ein elektrochemisches Verfahren (z. B. galvanische Abscheidung). Durch die vorhandene Al₂O₃-Schicht auf den Gaskanalwänden wird hier kein Metall abgeschieden. Die Abscheidung geschieht, wie gewünscht, nur auf den Stegoberflächen 5, d. h. an den Grenzflächen des Interkonnektors mit den Elektroden (vergleiche Fig. 2d). Somit wird erreicht, daß die bipolare Platte in der Endkontur auf den Stirnflächen 5 der Stege 2 eine dünne Schicht 9 aus Metall (Ni, Fe, Co) auf dem Grundmaterial (z. B. Cr-Basis- oder ferritischer FeCr-Legierung) aufweist, während auf den "Wänden" der Gaskanäle eine aluminiumreiche Schicht 7, bedeckt mit einer dünnen Al₂O₃-Schicht 8 vorliegt.

Bei Betriebsbedingungen (etwa 950 °C in Luft/O₂ bzw. in H₂/H₂O oder in anderen Brennstoffgemischen) bildet die so hergestellte bipolare Platte auf der Oberfläche 5 der Stege 2 (d. h. an den Kontaktstellen mit den Elektroden) die gewünschte Schicht auf Cr₂O₃-Basis, die mit Fe, Ni oder Co dotiert und an den Grenzflächen zum Gas mit einem Mischoxid (z.B. CrNi-, Cr/Co- oder Cr/Fe-Spinell) bedeckt ist, während auf den Wänden der Gaskanäle Al₂O₃ weiter aufwächst.

## Patentansprüche

1. Verfahren zur Herstellung einer bipolaren Platte für eine SOFC-Brennstoffzelle, bei der als Plattenmaterial eine chromoxidbildende Legierung verwendet und eine elektrisch isolierende, Korrosionseffekte vermindernde, mit Al₂O₃- Oberflächenbeschichtung im Bereich der Gasleitflächen, erhältlich durch Oxidation einer mit Al angereicherten zone auf der Oberfläche der bipolaren Platte, durchgeführt wird, **mit den Schritten**
- die Al-angereicherte zone und die Oxidschicht werden im bereich der Elektrodenkontaktfäche entfernt,
- eine elektrochemische Beschichtung der Elektrodenkontaktfläche (5) wird durch eine galvanische Abscheidung mit Nickel, Kobalt oder Eisen durchgeführt;
- aus dieser Beschichtung bildet sich bei Hochtemperatureinsatz der SOFC-Brennstoffzelle eine chromoxidhaltige Mischoxidschicht, enthaltend mindestens eines der Elemente Nickel, Kobalt oder Eisen, mit höherer Leitfähigkeit und geringerer Abdampfrate im Vergleich zur chromoxidbildenden Legierung hergestellt.

2. Bipolare Platte aus einer chromoxidbildenden Legierung für eine SOFC Brennstoffzelle mit einer Korrosionseffekte vermindernden, mit Aluminium angereicherten, elektrisch isolierenden Oxidschicht im Bereich der Gasleitflächen (3), und mit einer auf der Elektrodenkontaktfläche (5) befindlichen und nach einem Verfahren nach Anspruch 1 hergestellbaren, chromhaltigen Mischoxidschicht zur Erhöhung der Leitfähigkeit sowie Verringerung der Abdampfrate, die Nickel, Kobalt oder Eisen aufweist.

3. Bipolare Platte nach vorhergehendem Anspruch 2,
**dadurch gekennzeichnet,**
daß die auf der Elektrodenoberfläche (5) befindliche chromhaltige Mischoxidschicht weniger als 3 µm dick ist.

## Claims

1. A process for producing a bipolar plate for an SOFC fuel cell, wherein an alloy which forms chromium oxide is used as the plate material, and an electrically insulating Al₂O₃ surface coating, which reduces the effects of corrosion and which is obtainable by the oxidation of a zone which is enriched with Al on the surface of the bipolar plate, is formed in the region of the gas conducting faces, comprising the steps:
- the Al-enriched zone and the oxide layer are removed in the region of the electrode contact face,
- electrochemical coating of the electrode contact face (5) is carried out by the electrochemical deposition of nickel, cobalt or iron;
- a mixed oxide layer containing chromium oxide is formed from this coating when the SOFC fuel cell is used at high temperatures, which mixed oxide layer contains at least one of the elements nickel, cobalt or iron and has a higher conductivity and lower rate of volatilisation than the alloy which forms chromium oxide.

2. A bipolar plate, made of an alloy which forms chromium oxide, for an SOFC fuel cell, comprising an electrically insulating oxide layer, which is enriched with aluminium and which reduces the effects of corrosion, in the region of the gas conducting faces (3), and comprising a mixed oxide layer which contains chromium and which contains nickel, cobalt or iron, which is situated on the electrode contact face (5) and which can be produced by a process according to claim 1, for increasing the conductivity and for reducing the rate of volatilisation.

3. A bipolar plate according to the preceding claim 2,
characterised in that
the mixed oxide layer which contains chromium and which is situated on the electrode contact face (5) is less than 3 µm thick.

## Revendications

1. Procédé de fabrication d'une plaque bipolaire pour une pile à combustible SOFC, dans laquelle on utilise comme matériau de la plaque un alliage formant l'oxyde de chrome et un revêtement superficiel en Al₂O₃ diminuant les effets de la corrosion et isolant du point de vue électrique, que l'on peut obtenir par oxydation d'une zone enrichie en Al à la surface de la plaque bipolaire dans la région des surfaces devant lesquelles passe du gaz, comprenant les stades :
- la zone enrichie en Al et la couche d'oxyde sont éliminées dans la région des surfaces de contact des électrodes,
- un revêtement électrochimique des surfaces (5) de contact des électrodes est effectué par un dépôt galvanique de nickel, de cobalt ou de fer,
- il se forme à partir de ce revêtement lors de l'utilisation à haute température de la pile à combustible SOFC une couche d'oxyde mixte contenant de l'oxyde de chrome, comportant au moins l'un des éléments nickel, cobalt ou fer et ayant une plus grande conductivité et une plus petite vitesse d'évaporation que l'alliage formant de l'oxyde de chrome.

2. Plaque bipolaire en un alliage formant de l'oxyde de chrome pour une pile à combustible SOFC ayant une couche d'oxyde diminuant les effets de la corrosion, enrichie en aluminium et isolante du point de vue électrique dans la région des surfaces (3) devant lesquelles passe du gaz et ayant une couche d'oxyde mixte contenant du chrome qui se trouve sur la surface (5) de contact avec les électrodes et qui peut être préparée par un procédé suivant la revendication 1, qui est destinée à augmenter la conductivité ainsi qu'à diminuer la vitesse d'évaporation et qui comporte du nickel, du cobalt ou du fer.

3. Plaque bipolaire suivant la revendication 2 précédente, caractérisée en ce que la couche d'oxyde mixte contenant du chrome se trouvant sur la surface (5) des électrodes a une épaisseur inférieure à 3 µm.
